# DEMANDE DE BREVET EUROPEEN

(11) **EP 2 977 851 A1**
(43) Date de publication de la demande: **27.01.2016**
(21) Numéro de dépôt: 15177632.5
(22) Date de dépôt: 21.07.2015
(51) Int. Cl.: G06F 1/16, G06F 3/01, G07C 9/00, G02B 27/01, G06K 7/10

(54) **DISPOSITIF ET PROCEDE D'AUTHENTIFICATION DE DOCUMENT**

(30) Priorité: 21.07.2014 FR 1456998
(71) Demandeur: Morpho, 92130 Issy-les-Moulineaux (FR)
(72) Inventeur: NGUYEN, Eric, 92130 ISSY LES MOULINEAUX (FR); RIEUL, François, 92130 ISSY LES MOULINEAUX (FR); COUTURIER, Lauriane, 92130 ISSY LES MOULINEAUX (FR); JARLEGAN, Marie, 92130 ISSY LES MOULINEAUX (FR); CHASTEL, Pierre, 92130 ISSY LES MOULINEAUX (FR); BOUATOU, Vincent, 92130 ISSY LES MOULINEAUX (FR)
(74) Mandataire: Regimbeau

(57) **Abrégé**

L'invention concerne un dispositif (1) d'authentification d'informations contenues dans un document (6) comportant
- au moins un imageur configuré pour acquérir au moins une image d'un champ d'acquisition,
- au moins une source lumineuse,
- des moyens informatiques de traitement configurés pour traiter l'image et pour en extraire des données relatives au document,
ledit dispositif étant adapté pour être monté sur la tête d'un utilisateur (10) de sorte que son champ d'acquisition (11) recouvre au moins une partie du champ de vision (12) de l'utilisateur (10), la source lumineuse étant configurée pour émettre dans le champ d'acquisition (11) de l'imageur une lumière à au moins une longueur d'onde non visible, l'imageur étant adapté pour permettre des acquisitions à ladite longueur d'onde et ainsi permettre d'acquérir à cette longueur d'onde une image d'un document (6) présenté à l'utilisateur (10) dans le champ d'acquisition de l'imageur. L'invention concerne également le procédé correspondant.

## Description

La présente invention se rapporte à l'acquisition et à l'authentification d'un document sécurisé, tel qu'une pièce d'identité, un passeport ou un permis de conduire.

De nombreuses situations requièrent l'obtention d'une preuve d'identité et la nécessité de s'assurer de l'authenticité de celle-ci. C'est notamment le cas non seulement pour les organes officiels tels que la police ou les douanes, mais également pour générer un contrat entre un particulier et un fournisseur de services tel qu'un établissement bancaire, un loueur de véhicules automobiles, un hôtel, ou un opérateur de télécommunications.

En effet, de telles interactions nécessitent de renseigner dans un fichier électronique des données contenues dans des documents tels que des cartes d'identité, des permis de conduire, ou des passeports. Typiquement, un opérateur doit lire ces données sur les documents et les rentrer dans un ordinateur.

Afin de permettre la lecture automatique de documents, de nombreux documents présentent au moins une zone de lecture automatique dotée de données présentant une configuration prédéterminée et standardisée, connue du lecteur électronique et permettant à celui-ci d'extraire lesdites données prédéterminées et standardisées. On trouve une telle configuration dans des documents aussi divers que les tickets de cinéma, d'accès à une rencontre sportive ou à un concert, mais aussi sur des billets de train, d'avion, ou de banques.

A titre illustratif, afin de dispenser l'opérateur d'une tâche fastidieuse, certains documents sécurisés actuels présentent des zones de lecture automatiques (MRZ, de l'anglais « Machine Readable Zone »). Ces zones de lecture automatiques sont très répandues et se retrouvent non seulement dans les documents d'identité officiels, tels que les passeports et les permis de conduire, mais également dans des documents tels que des cartes de fidélité, des cartes d'adhérent ou des attestations de toutes sortes. Une zone de lecture automatique présente des caractères alphanumériques disposés selon une configuration prédéterminée et standardisée, connue du lecteur électronique et permettant à celui-ci d'extraire les données présentes dans cette suite de caractères alphanumériques.

Par exemple, les passeports récents présentent de telles zones dans lesquelles la zone de lecture automatique consiste en deux rangées de 44 caractères chacune. Pour la première rangée, le premier caractère est une lettre indiquant le type de document, en l'occurrence P pour un passeport. Le second caractère indique le type de passeport. Les troisième, quatrième, et cinquième caractères encodent le pays ou l'organisation de délivrance. Les 39 caractères suivants indiquent les noms et prénoms du titulaire du passeport. La seconde ligne commence par neuf caractères constituant le numéro du passeport, le dixième caractère constituant un chiffre de vérification. Les caractères 11 à 13 sont des lettres indiquant la nationalité du titulaire. Les caractères 14 à 19 sont des chiffres indiquant la date de naissance du titulaire.

Ainsi, un lecteur lisant la zone de lecture automatique est en mesure d'extraire les informations qui sont contenues, et qui permettent de renseigner les données essentielles caractérisant les documents telles que les données relatives à l'identité du titulaire d'un document d'identité, et ce sans intervention humaine.

Cependant, la simple lecture d'une zone de lecture automatique ou une reconnaissance optique de caractères ne peut servir à authentifier un document. Le document sécurisé peut contenir des éléments de sécurité à lecture automatique pouvant être lu et vérifié par des dispositifs de lecture automatique spécifiques (lecteurs de documents). Ce type d'élément sert à authentifier un document de voyage ou d'identité par la détection ou la mesure de propriétés physiques particulières que possèdent des éléments ou des structures du document et permet aussi d'authentifier le titulaire du document.

En outre, des systèmes ont été dotés de lecteurs de puces pour lire les puces électroniques contenues dans ces documents, ainsi que de moyens de vérification d'éléments de sécurité du document au moyen d'un éclairage hors spectre visible (infra-rouge, ultraviolet). A ce jour, de tels systèmes sont encombrants puisqu'ils se présentent généralement sous forme d'une borne auquel l'opérateur doit soumettre le document, en plus de l'inspection visuelle du document que doit effectuer l'opérateur. Ainsi, ces systèmes se révèlent peu pratique puisqu'ils nécessitent une manipulation supplémentaire du document de la part de l'opérateur afin d'amener ledit document dans une zone de lecture de la puce électronique.

De fait, une telle vérification en deux temps, l'une par l'opérateur humain puis l'autre par le système de vérification, fait perdre un temps précieux, notamment aux endroits où le flux de documents à vérifier est important, tels que les aéroports. En outre, les systèmes proposés sont encombrants et complexes.

### PRESENTATION DE L'INVENTION

L'invention a pour but de remédier au moins en partie à ces inconvénients et préférentiellement à tous, en proposant de combiner l'inspection visuelle effectuée par l'opérateur avec l'extraction d'informations et l'authentification du document par une machine.

Il est ainsi proposé un procédé d'authentification d'un document, mis en oeuvre par un dispositif d'authentification d'informations contenues dans un document, ledit dispositif comportant :
- au moins un imageur configuré pour acquérir au moins une image d'un champ d'acquisition,
- au moins une source lumineuse,
le dispositif étant adapté pour être monté sur la tête d'un utilisateur de sorte que son champ d'acquisition recouvre au moins une partie du champ de vision de l'utilisateur, la source lumineuse étant configurée pour émettre dans le champ d'acquisition de l'imageur une lumière à au moins une longueur d'onde non visible, l'imageur étant adapté pour permettre des acquisitions à ladite longueur d'onde et ainsi permettre d'acquérir à cette longueur d'onde une image d'un document présenté à l'utilisateur dans le champ d'acquisition de l'imageur,
ledit procédé comprenant les étapes selon lesquelles :
- la source lumineuse émet dans un spectre non visible de la lumière dans le champ d'acquisition en direction d'un document présenté à l'utilisateur,
- l'imageur acquiert au moins une image du document éclairé par la source lumineuse et envoie l'image aux moyens informatiques de traitement,
- des moyens informatiques de traitement, configurés pour traiter l'image et pour extraire des données relatives au document présentant une configuration prédéterminée dans le document, procèdent sur l'image à la détection d'un élément de sécurité dans au moins une longueur d'onde hors du spectre visible,
- le document est authentifié ou non sur la base de la détection ou non de l'élément de sécurité.

Ce procédé est avantageusement complété par les caractéristiques suivantes, prises seules ou en quelconque de leurs combinaisons techniquement possibles:
Ce procédé est avantageusement complété par les caractéristiques suivantes, prises seules ou en quelconque de leurs combinaisons techniquement possibles:
   - le procédé comprend :
   - une acquisition préalable par l'imageur d'une image du document dans le champ d'acquisition, et
   - une détection d'une zone de lecture automatique du document et l'extraction des informations contenues dans ladite zone de lecture automatique ;
   - l'étape de détection d'un motif de sécurité comprend les sous-étapes suivantes, à partir des informations contenues dans la zone de lecture automatique:
   - extraction d'une zone de l'image susceptible de contenir un élément de sécurité,
   - identification dans une base de données d'un élément de référence correspondant audit élément de sécurité et comparaison de la zone de l'image avec l'élément de référence ;
   - le procédé comprend des étapes selon lesquelles :
   - des données sont récupérées dans une base de données en fonction des informations contenues dans la zone de lecture automatique, et
   - ces données sont affichées dans le champ de vision de l'utilisateur par des moyens d'affichage tête haute ;
   - l'émission de lumière dans une longueur d'onde non visible par la source lumineuse est conditionnée par la lecture de la zone de lecture automatique ;
   - l'émission de lumière dans une longueur d'onde non visible par la source lumineuse est conditionnée par une commande de l'utilisateur.
Il est également proposé un ensemble pour la mise en oeuvre du procédé selon l'invention comprenant un dispositif d'authentification d'un document, comportant
   - au moins un imageur configuré pour acquérir au moins une image d'un champ d'acquisition,
   - au moins une source lumineuse,
   - des moyens informatiques de traitement configurés pour traiter l'image et pour en extraire des données relatives au document présentant une configuration prédéterminée dans le document,
ledit dispositif étant adapté pour être monté sur la tête d'un utilisateur de sorte que son champ d'acquisition recouvre au moins une partie du champ de vision de l'utilisateur, la source lumineuse étant configurée pour émettre dans le champ d'acquisition de l'imageur une lumière à au moins une longueur d'onde non visible, l'imageur étant adapté pour permettre des acquisitions à ladite longueur d'onde et ainsi permettre d'acquérir à cette longueur d'onde une image d'un document présenté à l'utilisateur dans le champ d'acquisition de l'imageur,
ledit ensemble comprenant également des moyens informatiques de traitement configurés pour traiter l'image et pour extraire des données relatives au document présentant une configuration prédéterminée dans le document, et pour détecter dans l'image ainsi acquise à cette longueur d'onde un élément de sécurité dans le document, ledit document étant authentifié ou non selon sur la base de la détection ou non de l'élément de sécurité.

Cet ensemble est avantageusement complété par les caractéristiques suivantes, prises seules ou en quelconque de leurs combinaisons techniquement possibles:
- les données présentant une configuration prédéterminée se présentent sous une forme alphanumérique dans le document;
- la source lumineuse est configurée pour émettre dans le domaine infrarouge ou ultraviolet ;
- le dispositif comprend au moins :
   - une première source lumineuse configurée pour émettre de la lumière dans l'ultra-violet dans le champ d'acquisition de l'imageur;
   - une seconde source lumineuse configurée pour émettre de la lumière dans l'infra-rouge dans le champ d'acquisition de l'imageur ;
- le dispositif comprend une monture adaptée pour maintenir le dispositif sur la tête de l'utilisateur par coopération avec ladite tête ;
- le dispositif comprend des moyens de montage pour monter le dispositif sur une monture de lunettes ;
- le dispositif comprend en outre des moyens d'affichage tête haute destinés à être disposés dans le champ de vision de l'utilisateur ;
- le dispositif comprend un accéléromètre et/ou un gyroscope dont les mesures sont prises en compte pour la commande de l'imageur et/ou de la source lumineuse;
- le dispositif comprend en outre un support de lecteur de puce électronique adapté pour être monté sur la main d'un utilisateur.

L'invention concerne également un produit programme d'ordinateur comprenant des instructions de code de programme enregistrées sur un support utilisable dans un ordinateur pour l'exécution des étapes du procédé selon l'invention lorsque ledit programme est exécuté sur un ordinateur.

### PRESENTATION DES FIGURES

L'invention sera mieux comprise, grâce à la description ci-après, qui se rapporte à des modes de réalisations et des variantes selon la présente invention, donnés à titre d'exemples non limitatifs et expliqués avec référence aux dessins schématiques annexés, dans lesquels:
- les figures 1 et 2 sont des vues schématiques d'un dispositif selon des modes de réalisation possibles de l'invention,
- la figure 3 est une vue schématique illustrant l'utilisation du dispositif selon un mode de réalisation possible de l'invention,
- la figure 4 est un schéma de principe illustrant des étapes du procédé selon un mode de réalisation possible de l'invention,
- la figure 5 illustre un exemple de différences de vision d'un document en fonction de différentes longueurs d'onde de lumière.

### DESCRIPTION DETAILLEE

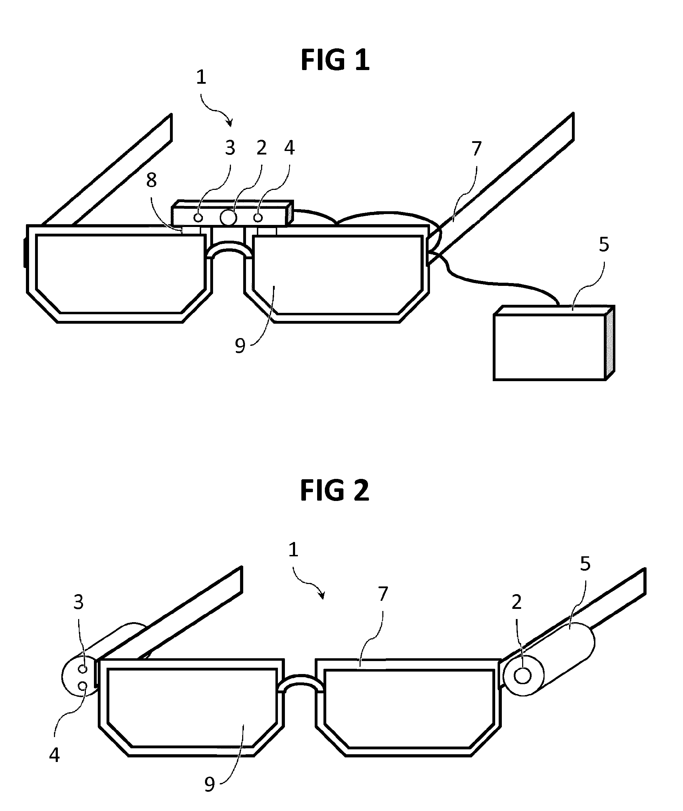

En référence aux figures 1 à 3, le dispositif 1 d'acquisition et d'authentification d'informations contenues dans un document comprend au moins un imageur 2 configuré pour acquérir au moins une image d'un champ d'acquisition 11. Le dispositif est adapté pour être monté sur la tête d'un utilisateur de sorte que le champ d'acquisition de l'imageur 2 recouvre au moins une partie du champ de vision 12 de l'utilisateur 10.

À cet égard, comme représenté sur les figures annexées, le dispositif peut comprendre une monture 7 adaptée pour maintenir le dispositif sur la tête de l'utilisateur 10 par coopération avec ladite tête, ou bien comprendre des moyens de montage 8 pour monter le dispositif 1 sur une monture 7 de lunettes destinées à être placé sur la tête de l'utilisateur 10, ces moyens de montage 8 pouvant par exemple prendre la forme d'un système d'emboîtage élastique.

Ainsi, dans l'exemple illustré par la figure 1, le dispositif présente des moyens de montage mécaniques élastiques 8 fixés sur une monture de lunettes 7. Le dispositif 1 est ici représenté disposé entre les deux cercles maintenant les verres au niveau de la barre supérieure de ceux-ci, au-dessus du pont les reliant. Il s'agit bien sûr d'un exemple d'autres types de monture peuvent être utilisés, comme des monocles ou des binocles, et les verres peuvent être absents.

Un ensemble d'authentification d'informations contenues dans un document comprend le dispositif 1 et des moyens informatiques de traitement 5, qui peuvent être intégrés au dispositif 1 ou en être distincts. De préférence, la paire de lunettes 7 sur lesquels sont montés le dispositif comprend les moyens informatiques de traitement 5 et/ou des moyens d'affichage tête haute 9 destinés à être disposés dans le champ de vision de l'utilisateur, du type lunettes intelligentes plus connues sous le terme anglais de « smart glasses », et le dispositif 1 est configuré pour pouvoir communiquer avec les moyens informatiques de traitement 5 de ces lunettes intelligentes, qui peuvent dès lors être déportés du dispositif 1 comme illustré sur la figure 1. Dans ce cas, les moyens informatiques de traitement 5 du dispositif 1 peuvent être ceux des lunettes intelligentes, il s'agit alors de moyens informatiques de traitement partagés, car non dédiés au dispositif 1.

Dans une autre variante, le dispositif peut comprendre une monture 7 adaptée pour maintenir le dispositif sur la tête de l'utilisateur par coopération avec ladite tête, comme c'est le cas lorsque le dispositif 1 prend la forme d'une paire de lunettes, comme par exemple illustré par la figure 2. Dans ce cas, les moyens informatiques de traitement 5 du dispositif 1 peuvent être des moyens informatiques de traitement dédié au dispositif 1, qui peuvent être incorporé à un boîtier contenant d'autres éléments comme l'imageur 2, ou bien être déportés, de manière similaire aux moyens informatiques de traitement 5 illustrés par la figure 1. De même, le dispositif 1 peut comprendre des moyens d'affichage tête haute 9 destinés à être disposés dans le champ de vision de l'utilisateur. Les moyens d'affichage tête haute 9 peuvent comprendre un verre transparent permettant à l'utilisateur 10 d'avoir une vision directe de son environnement, et un miroir transparent disposé entre le verre et l'utilisateur sur lequel sont projetées des images collimatées à l'infini. Le dispositif 1 peut alors prendre la forme de lunettes intelligentes évoquées plus haut.

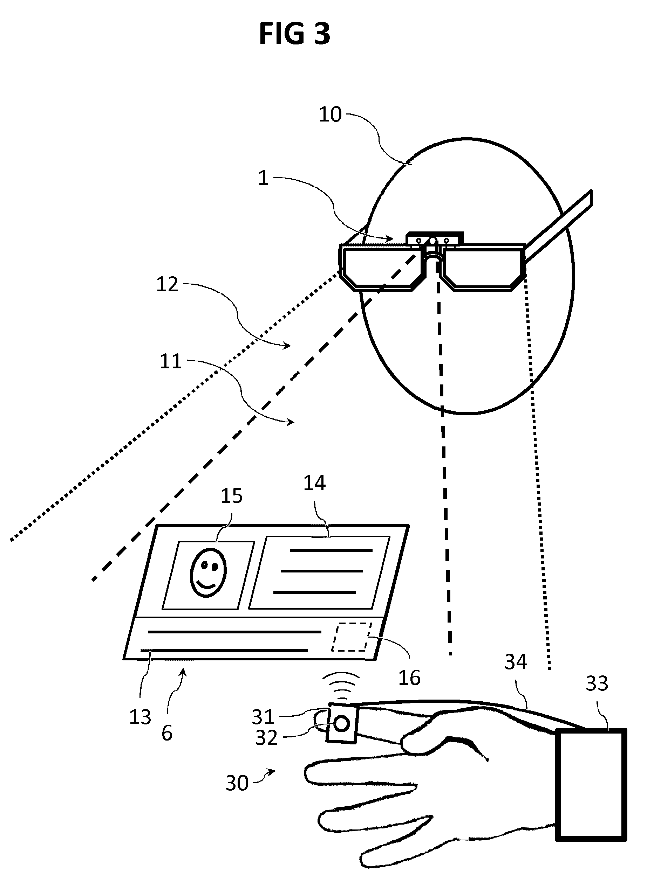

Comme illustré dans la figure 3, le champ d'acquisition 11 de l'imageur 2 se présente de telle sorte que tout document 6 disposé dans le champ de vision 12 de l'utilisateur 10 en vue d'une lecture par celui-ci se trouve dans le champ d'acquisition 11 de l'imageur 2. De préférence, le dispositif 1 est configuré pour que le champ d'acquisition 11 de l'imageur 1 recouvre au moins la partie centrale du champ de vision 12 de l'utilisateur 10. Dans l'idéal, le champ d'acquisition 11 épouse le plus étroitement possible le champ de vision 12 de l'utilisateur.

Le document 6 est un document sécurisé dont l'authentification est requise. Dans l'exemple présenté, il comporte une photographie 15 du titulaire du document 6, une zone d'inspection visuelle 14 comportant la désignation du document, les données personnelles du titulaire du document et les données relatives à l'émission et à la validité du document 6. Le document 6 peut comprendre également une zone de lecture automatique 13.

Le dispositif 1 comprend au moins une source lumineuse 3, 4. Celle-ci est configurée pour émettre dans le champ d'acquisition 11 de l'imageur 1 une lumière à au moins une longueur d'onde non visible, c'est-à-dire hors du spectre visible. Le spectre visible est généralement défini par les longueurs d'onde comprises entre 400 nm et 780 nm. Ainsi, une lumière à au moins une longueur d'onde non visible est une lumière dont la densité spectrale de puissance est maximale pour une longueur d'onde inférieure à 400 nm ou supérieure à 780 nm. De fait, cette longueur d'onde non visible appartient au domaine infrarouge ou ultraviolet. Ainsi, la source lumineuse 3, 4 est configurée pour émettre dans le domaine infrarouge ou ultraviolet. De préférence, au moins une source lumineuse 3, 4 émet dans l'ultraviolet.

Le terme ultraviolet (UV) désigne des ondes électromagnétiques dont les longueurs d'onde sont situées juste en dessous du spectre de la lumière visible (200 - 400 nm). Il s'agit d'une source de lumière utilisée pour l'examen des documents dans le but d'analyser la luminosité du support, les encres fluorescentes et d'autres éléments de sécurité, ainsi que les tentatives de manipulation.

Les documents douteux ou décolorés peuvent être examinés sous exposition aux ultraviolets afin d'obtenir plus de netteté et une meilleure résolution. De nombreuses encres changent d'apparence lorsqu'elles réagissent aux ondes électromagnétiques de la lumière (encre fluorescente). Les fibres de sécurité fluorescentes peuvent réagir de manière brillante. De plus, lorsque de telles fibres sont altérées par la tentative d'effacement d'un faussaire, cela peut se voir sous exposition aux UV.

La source lumineuse 3, 4 émettant dans l'ultraviolet peut par exemple émettre de la lumière dans les longueurs d'onde de 365/366 nm (UV de longueur d'onde longue), de 313 nm (UV de longueur d'onde moyenne) et de 254 nm (UV de longueur d'onde courte).

De préférence, comme sur les exemples illustrés, le dispositif comprend deux sources lumineuses 3, 4, qui sont chacune configurées pour émettre de la lumière à au moins une longueur d'onde non visible différente de l'autre. L'une peut émettre de la lumière dans l'infrarouge, par exemple à une longueur d'onde de 870 nm, et l'autre peut émettre dans l'ultraviolet, par exemple à une longueur d'onde de 365 nm. Par exemple, ces sources lumineuses 3, 4 sont des diodes électroluminescentes.

De ce fait, le dispositif 1 peut comprendre
- une première source lumineuse 3 configurée pour émettre de la lumière dans l'ultraviolet dans le champ d'acquisition 11 de l'imageur 1, et
- une seconde source lumineuse 4 configurée pour émettre de la lumière dans l'infrarouge dans le champ d'acquisition 11 de l'imageur 1.

La ou les sources lumineuses 3, 4 peuvent être disposées à proximité de l'imageur 2, comme c'est le cas sur la figure 1, ou bien en être éloignées, comme c'est le cas dans la figure 2, où l'imageur 2 est disposé sur une branche de la monture 7 tandis que les sources lumineuses 3, 4 sont disposées sur l'autre branche de la monture 7.

Dans tous les cas, la ou les sources lumineuses 3, 4 sont orientées de manière similaire à l'imageur 2, c'est-à-dire en direction du champ de vision 12 de l'utilisateur 10 lorsque le dispositif 1 est monté sur la tête de l'utilisateur 10, pour émettre de la lumière dans le sens opposé à la tête de l'utilisateur 10, notamment en direction d'un document 6 présenté à l'utilisateur 10 dans le champ d'acquisition 11 de l'imageur 2.

L'imageur 2 est adapté pour permettre une acquisition d'image à une longueur d'onde émise par la source lumineuse 3, 4 et ainsi permettre d'acquérir à cette longueur d'onde une image d'un document 6 présenté à l'utilisateur dans le champ d'acquisition 11 de l'imageur 2.

L'imageur 2 peut par exemple acquérir une image dans un spectre de longueur d'onde couvrant l'infrarouge, la lumière visible et l'ultraviolet, recouvrant ainsi les longueurs d'onde d'émission de la ou des sources lumineuses 3, 4. L'imageur 2 peut également acquérir une image dans l'ultraviolet émis par une première source lumineuse 3, et une autre dans l'infrarouge émis par la seconde source lumineuse 4.

L'éclairage par la source lumineuse 3, 4 peut être commandé via les moyens informatiques de traitement 5 dédiés du dispositif 1 ou ceux partagés par le dispositif 1, ou bien par l'action de l'utilisateur sur un organe de commande du dispositif tel qu'un bouton-poussoir.

De façon optionnelle, le dispositif peut comprendre un accéléromètre et/ou un gyroscope dont les mesures sont prises en compte pour la commande de l'imageur 2 et/ou de la source lumineuse 3, 4.

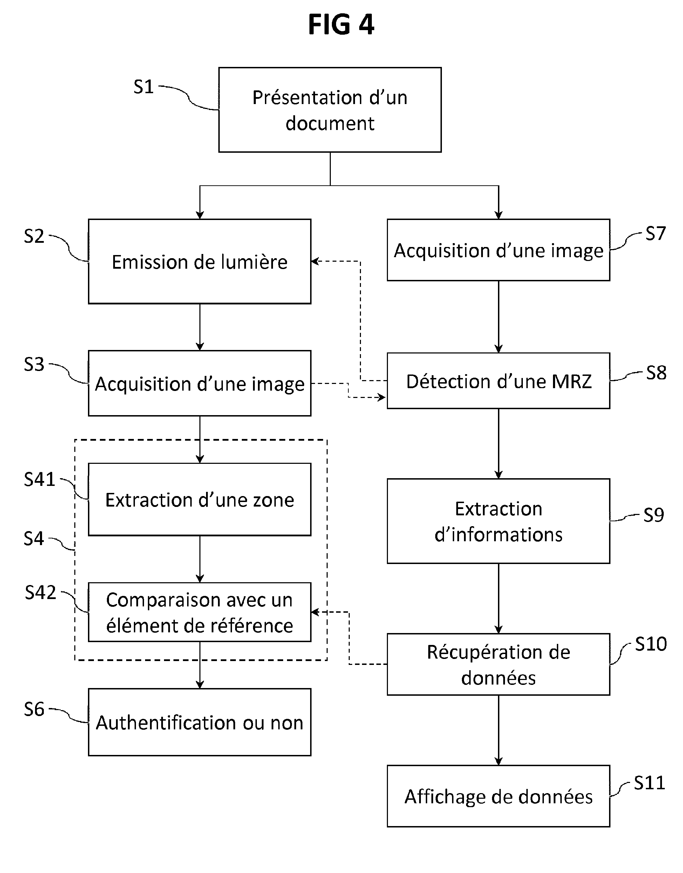

En référence à la figure 4, il va maintenant être décrit un procédé d'authentification d'un document 6 mis en oeuvre par un dispositif 1 tel que précédemment décrit. Le dispositif 1 est configuré pour mettre en oeuvre le procédé selon l'invention.

Un document 6 est présenté dans le champ de vision de l'utilisateur 10 (étape S1), dans une zone de celui-ci recouverte par le champ d'acquisition de l'imageur 2. Au moins une source lumineuse 3, 4 émet dans le champ d'acquisition 11 de l'imageur 2 une lumière à au moins une longueur d'onde non visible (étape S2), par exemple dans l'infra-rouge ou l'ultraviolet, ou les deux. Cette lumière est émise dans le sens opposé à celui de l'utilisateur 10, en direction du document 6.

L'émission de lumière dans une longueur d'onde non visible par la source lumineuse 3, 4 peut être conditionnée par une condition relative au document 6, comme détaillé par la suite, ou bien par une commande de l'utilisateur, par exemple l'appui sur un bouton, ou bien encore par une position de la tête de l'utilisateur 10 sur laquelle est disposé le dispositif 1, par exemple lorsqu'il a la tête baissée. Dans ce dernier cas, ce sont les mesures de l'accéléromètre et/ou du gyroscope qui sont prises en compte pour commander l'éclairage. Il est à noter que ces mesures peuvent également être prises en compte pour empêcher l'éclairage dans une longueur d'onde non visible par la source lumineuse 3, 4. La prise en compte de la position de la tête de l'utilisateur 10 permet d'empêcher l'émission de lumière, notamment en ultraviolet, en direction du détenteur du document 6.

L'imageur 2 acquiert (étape S3) au moins une image du document 6 éclairé par la source lumineuse 3, 4 et envoie l'image aux moyens informatiques de traitement 5, qui peuvent être dédiés au dispositif 1, ou bien ceux partagés avec des lunettes intelligentes. Il est à noter que l'imageur 2 peut acquérir des images de façon périodique, en filmant, mais que la lumière dans une longueur d'onde non-visible ne soit émise que ponctuellement. Le traitement d'authentification ne porte alors que sur la ou les images acquises pendant ou immédiatement après cet éclairage.

S'il y a deux sources lumineuses 3, 4, celles-ci peuvent émettre en même temps de la lumière à au moins une longueur d'onde non visible, ou bien une première source lumineuse 3 peut émettre de la lumière à au moins une longueur d'onde non visible, l'imageur 2 acquérant une première image du document 6 éclairé par cette première source lumineuse 3, puis une seconde source lumineuse 4 peut émettre de la lumière à au moins une longueur d'onde non visible, différente de celle de la première source lumineuse 3, et l'imageur 2 acquiert une deuxième image du document 6 éclairé par cette seconde source lumineuse 4. Ces images sont ensuite envoyées aux moyens informatiques de traitement 5.

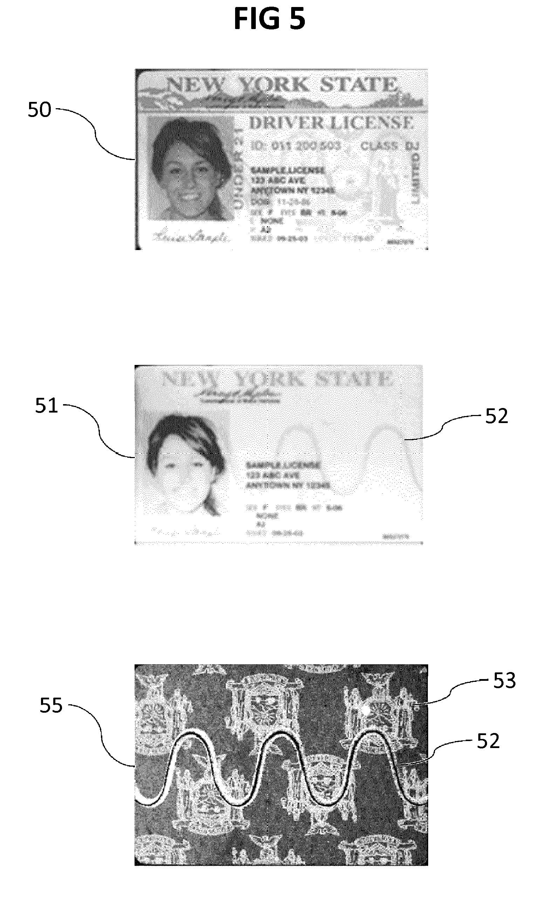

La figure 5 illustre un exemple de différences des éléments visibles d'un document en fonction de différentes longueurs d'onde de lumière. Il s'agit en l'occurrence d'un permis de conduire de l'état de New York. La première image 50 montre ce permis en lumière visible. Cette première image est donc représentative de ce que voit un utilisateur 10 considérant ce document à la lumière normale.

La seconde image 51 montre ce même permis sous une lumière infra-rouge. On y voit apparaître un fil de sécurité 52, tandis que certains motifs imprimés ont disparu. Il peut s'agir de motifs réalisés en couleurs métamères, qui sont des paires de couleurs chimiquement distinctes que l'on peut à peine distinguer sous un type d'éclairage déterminé, généralement en lumière normale, comme en plein jour, mais qui forment un contraste de couleurs bien visible lorsqu'elles sont observées sous un autre type de lumière, souvent dans l'infrarouge. Un exemple d'effet métamère particulier est l'invisibilité dans l'infrarouge, où de l'encre visible cesse de l'être dans une partie donnée du spectre infrarouge.

La troisième image 55 montre les éléments de sécurité sensibles aux ultraviolets du permis de conduire. Un élément de sécurité sensible aux ultraviolets être un motif imprimé par encre fluorescente, qui peut être visible en lumière normale et réagir aux ultraviolets. La réaction de fluorescence est une émission de lumière de très courte durée, qui cesse de briller presque immédiatement - dans les 10⁻⁸ secondes - après l'extinction de la source lumineuse. L'élément de sécurité sensible aux ultraviolets peut également être un motif imprimé par surimpression fluorescente, invisible en lumière normale.

On y retrouve le fil de sécurité 52, qui peut être une fine bande constituée de plastique, de métal ou d'un autre matériau, intégrée ou partiellement intégrée au support au cours du processus de fabrication du support papier.

On y voit également apparaître des éléments de sécurité formant chacun un motif d'authentification 53 sensible aux ultraviolets, par exemple imprimé par surimpression fluorescente.

Ainsi, l'éclairage par une lumière avec au moins une longueur d'onde hors du spectre visible d'un document 6 peut mettre en évidence la présence d'au moins un élément de sécurité, son absence, ou bien son altération.

Par conséquent, une fois l'image acquise et envoyée aux moyens informatiques de traitement 5, les moyens informatiques de traitement procèdent sur l'image à la détection d'un élément de sécurité (étape S4) dans une zone de l'image dans au moins une longueur d'onde hors du spectre visible, par exemple dans l'ultraviolet ou l'infrarouge. Le document est ensuite authentifié ou non sur la base de la détection ou non de l'élément de sécurité (étape S6).

L'étape S4 de détection d'un élément de sécurité comprend les sous-étapes suivantes :
- extraction d'une zone de l'image susceptible de contenir un élément de sécurité (étape S41),
- identification dans une base de données d'un élément de référence correspondant audit élément de sécurité et comparaison de la zone de l'image avec l'élément de référence (étape S42).

Pour identifier la zone de l'image à extraire, l'élément de sécurité susceptible d'y être contenu, et l'élément de référence, il faut que le type du document soit connu. En effet, chaque document sécurisé, tel que passeport ou permis de conduire, comporte des éléments de sécurité qui lui sont propres, tant dans leurs motifs, leurs caractéristiques, par exemple de réponse aux UV, que dans leurs emplacements.

A cet égard, bien qu'il soit possible que l'utilisateur saisisse manuellement le type du document, cette solution n'est pas optimale. Ainsi, de préférence, le procédé fait appel à la lecture de la zone de lecture automatique MRZ 13 du document 6.

Une zone de lecture automatique 13 est donc détectée (étape S8), soit sur l'image acquise lors de l'éclairage par la source lumineuse 3, 4 émettant de la lumière à au moins une longueur d'onde non visible, soit sur une image préalablement acquise (étape S7). Il est d'ailleurs possible que la détection de cette zone de lecture automatique 13 dans une image du document 6 préalablement acquise puisse être utilisée pour déclencher l'émission de lumière par la source lumineuse 3, 4 émettant de la lumière dans un domaine non-visible (étape S2). Ainsi, l'émission de lumière dans une longueur d'onde non visible par la source lumineuse 3, 4 peut être conditionnée par la détection d'une zone de lecture automatique 13 ou par les informations qui y sont contenues.

Lors de la détection d'une zone de lecture automatique 13, les informations contenues dans ladite zone de lecture automatique 13 sont extraites, et ensuite traitées par les moyens informatiques de traitement 5. En effet, les moyens informatiques de traitement 5 sont configurés pour extraire des données relatives au document 6 présentant une configuration prédéterminée dans le document 6, notamment dans le cas où les données présentant une configuration prédéterminée se présentent sous une forme alphanumérique dans le document.

Ainsi, les informations contenues dans ladite zone de lecture automatique 13 peuvent servir à déterminer le type de document présenté, et donc permettre d'identifier la zone de l'image à extraire, l'élément de sécurité susceptible d'y être contenu, et l'élément de référence dans une base de données.

Les informations contenues dans ladite zone de lecture automatique 13 peuvent aussi comprendre des données sur le titulaire du document 6, comme par exemple le nom du titulaire, et/ou sa date de naissance, qui peuvent être immédiatement disponible informatiquement pour renseigner des fichiers électroniques tels que des formulaires. Par ailleurs, les informations contenues dans la zone de lecture automatique 13 peuvent être utilisées pour récupérer des données (étape S10) dans une base de données, lesdites données étant fonction des informations contenues dans la zone de lecture automatique 13. Ces données peuvent ensuite être affichées dans le champ de vision 12 de l'utilisateur 10 par les moyens d'affichage tête haute 9 (étape S11 ).

Par exemple, il peut s'agir d'une photographie concernant le titulaire du document, ce qui permet à l'utilisateur 10 de comparer directement la photographie du titulaire avec le détenteur du document en les juxtaposant dans son champ de vision 12. Il est à noter que la photographie affichée peut également être la photographie 15 présente sur le document 6. Il peut s'agir encore d'autres données, comme par exemple des avis de recherche ou des notifications particulières.

Le dispositif 1 d'authentification d'informations peut également être utilisé pour acquérir, au moyen de l'imageur 2, une photographie du détenteur du document 6, plus précisément de son visage, afin de procéder à une reconnaissance de visage (dite aussi faciale) par comparaison une ou plusieurs référence(s). Par exemple, ces références peuvent être constituées par d'autres photographies provenant d'une base de données dans laquelle elles sont associées à l'identité du titulaire du document 6, ou bien d'un modèle ou d'une liste de marqueurs biométriques. La reconnaissance du visage est de préférence mise en oeuvre par les moyens de traitement 5. Cette mise en oeuvre d'une reconnaissance de visage permet de s'assurer que le détenteur du document 6 en est bien le titulaire attitré, malgré d'éventuelles évolutions physiques, par exemple dues à l'âge ou aux changements de pilosité ou de coupe de cheveux.

L'acquisition et le traitement de l'image du document 6 ne permet cependant pas d'exploiter la présence éventuelle d'une puce, c'est-à-dire d'un support électronique sécurisé constitué d'un circuit intégré destiné à stocker et traiter des données, intégré par exemple dans les passeports, les cartes d'identité et les permis de séjour biométriques. La puce peut par exemple contenir les données personnelles: le nom, le lieu et la date de naissance, l'autorité de délivrance et la numérisation du visage du titulaire. La puce peut être une puce à contact ou une puce sans contact.

Dans le cas d'une puce à contact, pour pouvoir lire les informations qui figurent dans une carte d'identité dotée d'une puce à contact, il faut que la puce puisse entrer en contact avec des connecteurs électriques. Une puce sans contact est un circuit intégré sans contact. La puce (invisible sur la plupart des documents) est connectée à une antenne permettant de communiquer avec le lecteur de carte au moyen d'ondes électromagnétiques. Le lecteur doit être suffisamment proche pour que la transmission puisse débuter. Le contenu protégé de la puce peut être lu à une distance de 0 à 10 cm.

Les passeports biométriques ou les passeports électroniques comportent une puce sans contact (ou de proximité). Cette puce peut être intégrée au document de voyage de différentes façons. Elle peut être intégrée dans un film de sécurité épais transparent, dans la couverture du document, ou dans une page spéciale en polycarbonate. Pour assurer la sécurité des données, on utilise souvent un contrôle d'accès de base (en anglais "Basic Access Control", ou BAC) : la puce sans contact ne peut être lue par le lecteur approprié qu'après avoir été déverrouillée au moyen d'un code PIN validé. On peut aussi utiliser un contrôle d'accès étendu (en anglais "Extended Access Control", ou EAC) pour l'authentification du terminal. En guise de sécurité, une signature numérique, par exemple utilisant le protocole cryptographique de type "Infrastructure à clé publique" (ICP), protège l'authenticité et l'intégrité des données stockées.

Ainsi, le dispositif d'authentification d'informations peut également comprendre un support de lecteur de puce adapté pour être monté sur la main d'un utilisateur. Ce support peut par exemple prendre la forme d'un gant ou d'une bague muni d'un lecteur de puce. Le lecteur de puce peut être un lecteur de puce avec contact ou de préférence un lecteur de puce sans contact.

Sur la figure 3 est présenté un exemple de support de lecteur de puce 30 monté sur une main de l'utilisateur 10. Le support 30 peut comprendre une monture 31 prenant ici la forme d'une bague, une antenne radiofréquence type NFC (de l'anglais "Near Field Communication" pour communication en champ proche), un lecteur de puce 32, et une interface de communication avec ou sans fil, et une alimentation électrique. De préférence, l'alimentation électrique est réalisée par une batterie. L'interface de communication est de préférence une interface de radiocommunication de type Bluetooth. Le support peut comprendre un microcontrôleur. Le microcontrôleur et la batterie peuvent être déportés dans un boîtier 33 par exemple monté sur le poignet de l'utilisateur. Un fil 34 relie ce boîtier 33 à la monture 31, pour acheminer les informations entre le lecteur de puce 32 et le microcontrôleur du boîtier 33, aussi bien que pour l'alimentation dudit lecteur de puce 32 à partir de la batterie du boîtier 33.

Le support 30 de lecteur de puce est relié aux moyens informatiques de traitement 5 auxquels sont envoyées les images acquises par l'imageur 2, et ces moyens informatiques de traitement 5 sont également configurés pour traiter les informations issues de la lecture de la puce. La liaison entre le support 30 de lecteur de puce et les moyens informatiques de traitement 5 peut être filaire mais est de préférence une liaison radiofréquence réalisée par une interface de type Bluetooth.

Comme illustré sur la figure 3, lors d'une de la présentation à l'utilisateur 10 d'un document 6 muni d'une puce 16, celui-ci place le support 31 de lecteur de puce 32 à proximité de la puce 16 du document 6. Par exemple, si le lecteur 32 est placé au niveau d'un doigt de l'utilisateur, celui-ci place son doigt à proximité de la puce 16. La monture 31 qui porte le lecteur 32 est placée de préférence à un niveau de la main qui est destiné à venir à proximité de la puce 16 lorsque l'utilisateur tient le document 6 dans sa main. De préférence, le lecteur 32 est placé au niveau de l'index ou du pouce de la main de l'utilisateur.

Ainsi, la préhension naturelle du document 6 par la main de l'utilisateur 10 amène le lecteur 32 à proximité de la puce 16, de sorte qu'une communication par radiofréquence, s'établit entre le lecteur 32 et la puce 16. L'accès aux informations de la puce 16 peut cependant être restreint par une clé ou un code.

Par exemple, le protocole PACE, acronyme de l'anglais "Password Authenticated Connection Establishment" pour établissement d'une connexion authentifié par mot de passe, utilise les données de la zone de lecture automatique pour l'authentification. Une donnée facultative supplémentaire - le code d'accès à la carte - qui est imprimée dans la zone d'inspection visuelle de la page des données biographiques - peut également servir à l'authentification.

L'extraction d'informations de la zone de lecture automatique (étape S9) ou bien la lecture des données par reconnaissance optique de caractère, peut renseigner la clé nécessaire à la lecture de la puce 16. A partir des images acquises par l'imageur 2, les moyens informatiques de traitement 5 peuvent décoder les informations qui y sont contenues et calculer la clé permettant de lire la puce 16. Les moyens informatiques de traitement 5 envoient cette clé au lecteur de puce 32. Celui-ci lit la puce 16 et les informations lues sont envoyées, par exemple via la liaison filaire 34 et l'interface radiofréquence du support 30 vers les moyens de traitement informatiques 5.

Par exemple, les informations lues dans la puce 16 peuvent comprendre des photographies du visage du détenteur du document 6 et/ou des empreintes digitales, ou toutes autres données telles que des données biométriques. Les moyens informatiques de traitement peuvent alors comparer les informations lues dans la puce 16 à celles extraites dans la zone de lecture automatique ou celle extraites d'autres parties du document 6 comme la photographie. Un affichage d'informations grâce aux moyens d'affichage tête haute 9 peut être effectué, avec par exemple l'affichage du résultat de la comparaison susmentionnée ou bien la juxtaposition de données telles que des photographies.

L'invention n'est pas limitée au mode de réalisation décrit et représenté aux figures annexées. Des modifications restent possibles, notamment du point de vue de la constitution des divers éléments ou par substitution d'équivalents techniques, sans sortir pour autant du domaine de protection de l'invention.

## Revendications

1. Procédé d'authentification d'un document, mis en oeuvre par un dispositif (1) d'authentification d'informations contenues dans un document (6), ledit dispositif comportant :
- au moins un imageur (2) configuré pour acquérir au moins une image d'un champ d'acquisition (11),
- au moins une source lumineuse (3, 4),
le dispositif étant adapté pour être monté sur la tête d'un utilisateur (10) de sorte que son champ d'acquisition (11) recouvre au moins une partie du champ de vision (12) de l'utilisateur (10), la source lumineuse (3, 4) étant configurée pour émettre dans le champ d'acquisition (11) de l'imageur (2) une lumière à au moins une longueur d'onde non visible, l'imageur (2) étant adapté pour permettre des acquisitions à ladite longueur d'onde et ainsi permettre d'acquérir à cette longueur d'onde une image d'un document (6) présenté à l'utilisateur (10) dans le champ d'acquisition de l'imageur (2),
ledit procédé comprenant les étapes selon lesquelles :
- la source lumineuse (3,4) émet (S2) dans un spectre non visible de la lumière dans le champ d'acquisition (11) en direction d'un document (6) présenté à l'utilisateur (10),
- l'imageur (2) acquiert (S3) au moins une image du document (6) éclairé par la source lumineuse (3,4) et envoie l'image aux moyens informatiques de traitement (5),
- des moyens informatiques de traitement (5), configurés pour traiter l'image et pour extraire des données relatives au document (6) présentant une configuration prédéterminée dans le document (6), procèdent sur l'image à la détection (S4) d'un élément de sécurité dans au moins une longueur d'onde hors du spectre visible,
- le document est authentifié ou non sur la base de la détection ou non de l'élément de sécurité.

2. Procédé selon la revendication précédente, comprenant
- une acquisition préalable (S7) par l'imageur (2) d'une image du document (6) dans le champ d'acquisition (11), et
- une détection (S8) d'une zone de lecture automatique (13) du document et l'extraction des informations contenues dans ladite zone de lecture automatique.

3. Procédé selon la revendication 2, dans lequel l'étape de détection d'un motif de sécurité comprend les sous-étapes suivantes, à partir des informations contenues dans la zone de lecture automatique:
- extraction (S41) d'une zone de l'image susceptible de contenir un élément de sécurité,
- identification dans une base de données d'un élément de référence correspondant audit élément de sécurité et comparaison (S42) de la zone de l'image avec l'élément de référence.

4. Procédé selon l'une des revendications 2 ou 3, comprenant des étapes selon lesquelles :
- des données sont récupérées dans une base de données en fonction des informations contenues dans la zone de lecture automatique, et
- ces données sont affichées dans le champ de vision (12) de l'utilisateur (10) par des moyens d'affichage tête haute (9).

5. Procédé selon l'une des revendications 2 à 4, dans lequel l'émission de lumière dans une longueur d'onde non visible par la source lumineuse (3,4) est conditionnée par la lecture de la zone de lecture automatique (13).

6. Procédé selon l'une des revendications 1 à 4, dans lequel l'émission de lumière dans une longueur d'onde non visible par la source lumineuse (3,4) est conditionnée par une commande de l'utilisateur.

7. Ensemble pour la mise en oeuvre du procédé selon l'une des revendications précédentes comprenant un dispositif (1) d'authentification d'informations contenues dans un document (6), ledit dispositif comportant:
- au moins un imageur (2) configuré pour acquérir au moins une image d'un champ d'acquisition (11),
- au moins une source lumineuse (3, 4),
**caractérisé en ce que** ledit dispositif (1) est adapté pour être monté sur la tête d'un utilisateur (10) de sorte que son champ d'acquisition (11) recouvre au moins une partie du champ de vision (12) de l'utilisateur (10), la source lumineuse (3, 4) étant configurée pour émettre dans le champ d'acquisition (11) de l'imageur (2) une lumière à au moins une longueur d'onde non visible, l'imageur (2) étant adapté pour permettre des acquisitions à ladite longueur d'onde et ainsi permettre d'acquérir à cette longueur d'onde une image d'un document (6) présenté à l'utilisateur (10) dans le champ d'acquisition de l'imageur (2),
et **en ce que** ledit ensemble comprend des moyens informatiques de traitement (5) configurés pour traiter l'image et pour extraire des données relatives au document (6) présentant une configuration prédéterminée dans le document (6), et pour détecter dans l'image ainsi acquise à cette longueur d'onde un élément de sécurité dans le document, ledit document étant authentifié ou non selon sur la base de la détection ou non de l'élément de sécurité.

8. Ensemble selon la revendication précédente, dans lequel les données présentant une configuration prédéterminée se présentent sous une forme alphanumérique dans le document.

9. Ensemble selon la revendication précédente, dans lequel la source lumineuse (3,4) est configurée pour émettre dans le domaine infrarouge ou ultraviolet.

10. Ensemble selon la revendication précédente, comprenant au moins :
- une première source lumineuse (3) configurée pour émettre de la lumière dans l'ultra-violet dans le champ d'acquisition (11) de l'imageur (2);
- une seconde source lumineuse (4) configurée pour émettre de la lumière dans l'infra-rouge dans le champ d'acquisition (11) de l'imageur (2).

11. Ensemble selon l'une des revendications 7 à 10, dans lequel le dispositif comprend une monture (7) adaptée pour maintenir le dispositif (1) sur la tête de l'utilisateur (10) par coopération avec ladite tête.

12. Ensemble selon l'une quelconque des revendications 7 à 10, dans lequel le dispositif comprend des moyens de montage (8) pour monter le dispositif (1) sur une monture (7) de lunettes.

13. Ensemble selon l'une quelconque des revendications 7 à 12, comprenant en outre des moyens d'affichage tête haute (9) destinés à être disposés dans le champ de vision (12) de l'utilisateur (10).

14. Ensemble selon l'une quelconque des revendications 7 à 13, comprenant un accéléromètre et/ou un gyroscope dont les mesures sont prises en compte pour la commande de l'imageur (2) et/ou de la source lumineuse (3,4).

15. Ensemble selon l'une quelconque des revendications 7 à 14, comprenant en outre un support (30) de lecteur de puce adapté pour être monté sur la main d'un utilisateur.

16. Produit programme d'ordinateur comprenant des instructions de code de programme enregistrées sur un support utilisable dans un ordinateur pour l'exécution des étapes du procédé selon l'une quelconque des revendications 1 à 6 lorsque ledit programme est exécuté sur un ordinateur.
